(19) Europäisches Patentamt / European Patent Office / Office européen des brevets

(11) **EP 1 454 792 B1**

(12) **EUROPÄISCHE PATENTSCHRIFT**

(45) Veröffentlichungstag und Bekanntmachung des Hinweises auf die Patenterteilung:
**30.07.2008 Patentblatt 2008/31**

(51) Int Cl.:
**B60Q 1/115** *(2006.01)* **B60G 17/015** *(2006.01)*
**B60Q 1/10** *(2006.01)*

(21) Anmeldenummer: **04002640.3**

(22) Anmeldetag: **06.02.2004**

(54) **Scheinwerferanlage für ein Landfahrzeug**

Headlight arrangement for a land vehicle

Dispositif de phares pour véhicule routier

(84) Benannte Vertragsstaaten:
**AT BE BG CH CY CZ DE DK EE ES FI FR GB GR HU IE IT LI LU MC NL PT RO SE SI SK TR**

(30) Priorität: **05.03.2003 DE 10309512**

(43) Veröffentlichungstag der Anmeldung:
**08.09.2004 Patentblatt 2004/37**

(73) Patentinhaber: **Volkswagen Aktiengesellschaft 38436 Wolfsburg (DE)**

(72) Erfinder:
• **Werner, Michael
38551 Vollbüttel (DE)**
• **Jahrsau, Bernd
38524 Sassenburg (DE)**

(56) Entgegenhaltungen:
**EP-A- 0 355 539      EP-A- 0 825 063
DE-A- 3 129 891      DE-A- 4 026 553
DE-A- 10 128 919     GB-A- 2 373 222**

**Beschreibung**

Die Erfindung betrifft eine Scheinwerferanlage für ein Landfahrzeug, insbesondere ein Kraftfahrzeug, mit zumindest einem mittels eines Aktors einstellbaren Scheinwerfer, wobei eine optische Lichtachse des Scheinwerfers mittels des Aktors in Abhängigkeit eines Wertes des Nickwinkels des Landfahrzeugs relativ zu dem Landfahrzeug nach oben und/oder unten geneigt werden kann.

Ein solcher mittels eines Aktors einstellbarer Scheinwerfer ist z.B. aus der DE 100 44 512 A1 bekannt. Zur Ansteuerung des Aktors ist gemäß der DE 100 44 512 A1 ein Fahrgeschwindigkeitssensor und ein Fahrzeughöhensensor vorgesehen, welcher entweder an einer linken oder einer rechten Aufhängung an entweder einem vorderen oder hinteren Abschnitt des Fahrzeugs zum Erfassen eines Abstands zwischen einer Achse und dem Fahrzeugkörper vorgesehen ist. Dabei werden Steuerdaten durch mindestens zwei oder mehr Steuerlinien mit unterschiedlichen Neigungen dargestellt.

In der DE 196 28 405 A1 ist eine Vorrichtung zur Korrektur der Einstellung wenigstens eines Scheinwerfers eines Kraftfahrzeugs in Abhängigkeit von den Neigungsveränderungen der Fahrzeugkarosserie infolge von Laständerungen offenbart, wobei diese Vorrichtung Sensormittel zur Messung der Neigung der Fahrzeugkarosserie umfasst, sowie einen Filter mit langer Zeitkonstante, das ein gefiltertes Neigungssignal liefert, Mittel zur Erstellung der Einstellungskorrektur in Abhängigkeit vom Wert des gefilterten Neigungssignals, und wenigstens ein Stellglied, das durch die Mittel zur Korrekturerstellung gesteuert wird und mit einem Scheinwerfer des Fahrzeugs verbunden ist, wobei Erfassungsmittel vorgesehen sind, um den Unbeweglichkeits- oder Beweglichkeitszustand des Fahrzeugs in Abhängigkeit vom Inhalt des momentanen Neigungssignals zu bestimmen, und Schaltvorrichtungen, um auf die Mittel zur Korrekturerstellung ein gefiltertes Neigungssignal mit einer kürzeren Filterzeitkonstante als die besagte lange Zeitkonstante anzuwenden, wenn die Unbeweglichkeit des Fahrzeugs erfasst wird.

Die EP 0 825 063 A1 offenbart eine Einrichtung zur automatischen Steuerung einer Richtung eines Fahrzeugscheinwerfers mit einer optischen Achsensteuerungseinrichtung zur Steuerung der optischen Achse des Fahrzeugscheinwerfers und mit einer Straßenzustandsbestimmungseinrichtung zur Bestimmung eines Zustands einer Straße, auf der das Fahrzeug fährt, wobei die optische Achsensteuerungseinrichtung weiterhin eingerichtet ist, das Ansprechverhalten der Steuerung der Richtung der optischen Achse des Fahrzeugschweinwerfers zu verzögern, wenn die Straßenzustandsbestimmungseinrichtung bestimmt, dass das Fahrzeug auf einer unebenen Straße fährt, wobei die Einrichtung zur automatischen Steuerung einer Richtung eines Fahrzeugscheinwerfers zudem eine Neigungsberechnungseinrichtung zur Berechnung einer Neigung der optischen Achse des Fahrzeugscheinwerfers in Bezug auf eine Referenzebene umfasst, die in Richtung des Fahrzeugscheinwerfers verläuft, wobei mittels der optischen Achsensteuerungseinrichtung weiterhin die Richtung der optischen Achse des Fahrzeugscheinwerfers auf der Grundlage der durch die Neigungsberechnungseinrichtung berechneten Neigung steuerbar ist, und wobei mittels der Straßenzustandsbestimmungseinrichtung ein Zustand einer Straße, auf der das Fahrzeug fährt, auf der Grundlage eines Vibrationszustands bestimmbar ist.

Aus der Europäischen Patentschrift EP 0 355 539 B1 ist ein Verfahren zur Regelung der Leuchtweite eines Fahrzeuges bekannt, bei dem beispielhaft über Niveaugeber die relative Stellung der Fahrzeugkarosserie zu einer Achse, und damit die Lage der Fahrzeugkarosserie zur Fahrbahn, ermittelt wird. Diese Signale werden durch eine Mittelwertbildung gefiltert, wobei unterschiedliche Filterzeitkonstanten für die Mittelwertbildung vorgesehen sind. Demgemäss kann die Regelung der Leuchtweite in mindestens einem schnellen und mindestens einem langsamen Regelmodus durchgeführt werden. Die Umschaltung zwischen den schnellen und langsamen Regelmodi erfolgt in Abhängigkeit der gemessenen positiven oder negativen Beschleunigung des Fahrzeuges. Ziel einer solchen dynamischen Leuchtweiteregelung besteht darin, die Scheinwerferposition und damit die Leuchtweite vor dem Fahrzeug entsprechend der Karosserieneigung durch Beladung, Beschleunigung und Bremsen auszuregeln. Die Umschaltung auf langsame Regelmodi hat dabei zum Ziel, dass bei kontinuierlicher Fahrt ohne wesentliche Karosserieneigungen Unebenheiten in der Fahrbahn, z. B. Schlaglöcher, möglichst nicht ausgeregelt werden sollen. Dabei ist gemäß der DE 198 24 862 A1 nachteilig, dass bei der längsbeschleunigungsabhängigen Umschaltung der Regelmodi, z. B. auch bei einer kontinuierlichen Beschleunigung des Fahrzeugs, bei der keine Neigungsänderung der Karosserie vorliegt, ein schneller Regelmodus gewählt wird, so dass während einer solchen Beschleunigung in der Fahrbahn auftretende Unebenheiten wie Schlaglöcher zu einer Verstellung der Scheinwerferposition und damit zu einer Verstellung der Leuchtweite führen, wodurch eine unruhige Bewegung der Hell-Dunkel-Grenze der Lichtverteilung der Scheinwerfer erzeugt wird und eine Irritation des Fahrzeugführers herbeigeführt werden kann.

Aus der Europäischen Patentschrift EP 0 470 407 B1 ist eine Einrichtung zur Regelung der Leuchtweite eines Kraftfahrzeuges bekannt, die nach dem gleichen Grundprinzip arbeitet wie die Einrichtung zur Regelung der Leuchtweite gemäß der EP 0 355 539 B1, wobei jedoch die Umschaltung der Regelmodi aufgrund eines Bremseingriffes erfolgt. Dabei erweist es sich gemäß der DE 198 24 862 A1 bei dieser Einrichtung als nachteilig, dass nur negative Beschleunigungen für die Umschaltung der Regelmodi berücksichtigt werden.

Aus der Europäischen Patentschrift EP 0 709 240 B1 ist eine dynamische Leuchtweitenregelung bekannt, bei der die Veränderung der Lage der Fahrzeugkarosserie allein aufgrund der Änderung der Längsbeschleunigung bzw. Verzögerung des Fahrzeuges ermittelt und in eine Verstellung der Scheinwerfer umgesetzt wird. Bei einem solchen System zur Regelung der Leuchtweite erweist es sich gemäß der DE 198 24 862 A1 als nachteilig, dass die Lage der Fahrzeugkarosserie zur Fahrbahn nur indirekt bestimmt werden kann und somit ein Fehler bei der Leuchtweitenregelung auftritt.

Gemäß der DE 198 24 862 A1 wird zur Verbesserung der Regelung der Leuchtweite eines Fahrzeugs ein Verfahren zur Regelung der Leuchtweite von Fahrzeugscheinwerfem vorgeschlagen, bei dem die Regelung aufgrund der Lage der Karosserie zur Fahrbahn erfolgt und die Regelung mindestens einen schnellen und mindestens einen langsamen Regelmodus aufweist, wobei die Umschaltung von einem langsamen Regelmodus in einen schnellen Regelmodus abhängig von der Längsbeschleunigung des Fahrzeugs erfolgt, wobei die Umschaltung von einem langsamen Regelmodus in einen schnellen Regelmodus dann erfolgt, wenn der Betrag der Änderung der Längsbeschleunigung einen vorgegebenen Schwellwert überschreitet.

Aus der DE 42 02 908 A1, DE 44 37 949 und der EP 0 847 895 B1 ist zudem bekannt, eine Leuchtweitenregelung für ein Kraftfahrzeug in Abhängigkeit der Geschwindigkeit und Beschleunigung des Kraftfahrzeugs zu parametrieren.

Es ist Aufgabe der Erfindung, eine Scheinwerferanlage für ein Landfahrzeug, insbesondere für ein Kraftfahrzeug, mit zumindest einem mittels eines Aktors einstellbaren Scheinwerfer, wobei eine optische Lichtachse des Scheinwerfers mittels des Aktors in Abhängigkeit eines Wertes des Nickwinkels des Landfahrzeugs relativ zu dem Landfahrzeug nach oben und/oder unten geneigt werden kann, zu verbessern. Dabei soll insbesondere die Reaktion einer solcher Scheinwerferanlage beim Überfahren von Schlaglöchern verbessert werden.

Vorgenannte Aufgabe wird durch eine Scheinwerferanlage für ein auf einer Oberfläche fahrbares Landfahrzeug, insbesondere ein Kraftfahrzeug, mit zumindest einem mittels eines Aktors einstellbaren Scheinwerfer gelöst, wobei eine optische Lichtachse des Scheinwerfers mittels des Aktors in Abhängigkeit eines Wertes des Nickwinkels des Landfahrzeugs relativ zu dem Landfahrzeug nach oben und/oder unten geneigt werden kann, wobei ein Oberflächenmodell zur Ermittlung von Einwirkungen von Unebenheiten der Oberfläche auf den Nickwinkel und eine Korrekturvorrichtung zur Korrektur des Wertes vorgesehen ist, um die optische Lichtachse des Scheinwerfers mittels des Aktors in Abhängigkeit des durch das Oberflächenmodell gebildeten korrigierten Wertes des Nickwinkels nach oben und/oder nach unten zu neigen.

Vorgenannte Aufgabe wird auch durch eine Scheinwerferanlage für ein Landfahrzeug, insbesondere ein Kraftfahrzeug, mit zumindest einem mittels eines Aktors einstellbaren Scheinwerfer gelöst, wobei eine optische Lichtachse des Scheinwerfers mittels des Aktors relativ zu dem Landfahrzeug nach oben und/oder unten geneigt werden kann, wobei ein adaptiver Filter zumindest einen veränderlichen Parameter aufweist, der in Abhängigkeit des Wertes des Nickwinkels und eines gefilterten Wertes des Nickwinkels veränderbar ist, um die die optische Lichtachse des Scheinwerfers mittels des Aktors in Abhängigkeit des durch den adaptiven Filter gebildeten veränderlichen Parameters nach oben und/oder nach unten zu neigen.

Die optische Lichtachse des Scheinwerfers kann dabei in weiterhin vorteilhafter Ausgestaltung der Erfindung mittels des Aktors in Abhängigkeit des gefilterten Wertes des Nickwinkels des Landfahrzeugs relativ zu dem Landfahrzeug nach oben und/oder unten geneigt werden.

Vorgenannte Aufgabe wird auch durch eine Scheinwerferanlage für ein Landfahrzeug, insbesondere ein Kraftfahrzeug, mit zumindest einem mittels eines Aktors einstellbaren Scheinwerfer gelöst, wobei eine optische Lichtachse des Scheinwerfers mittels des Aktors relativ zu dem Landfahrzeug nach oben und/oder unten geneigt werden kann, und wobei die optische Lichtachse des Scheinwerfers mittels des Aktors in Abhängigkeit eines in Abhängigkeit eines Wertes der ersten zeitlichen Ableitung der Geschwindigkeit gebildeten Wertes relativ zu dem Landfahrzeug nach oben und/oder unten geneigt werden kann.

Einwirkungen von Unebenheiten der Oberfläche auf den Nickwinkel im Sinne der Erfindung sind auch Einwirkungen auf Größen, mittels dessen der Nickwinkel berechnet wird. Eine Korrektur des Wertes des Nickwinkels um die ermittelten Einwirkungen der Unebenheiten der Oberfläche auf den Nickwinkel im Sinne der Erfindung umfasst nicht nur eine unmittelbare Korrektur des Wertes des Nickwinkels sondern auch eine mittelbare Korrektur des Wertes des Nickwinkels durch Korrektur von Werten mittels derer der Wert des Nickwinkels berechnet wird. So ist z. B. vorteilhafterweise bei einem Landfahrzeug mit eine Vorderachse und einer Hinterachse sowie Sensorik zur Bestimmung eines Wertes der Höhe der Vorderachse und eines Wertes der Höhe der Hinterachse vorgesehen, dass die Korrekturvorrichtung zur Korrektur des Wertes der Höhe der Vorderachse und des Wertes der Höhe der Hinterachse um die ermittelten Einwirkungen der Unebenheiten der Oberfläche auf den Nickwinkel ausgebildet ist. In vorteilhafter Ausgestaltung der Erfindung ist dabei ein Nickwinkelberechner zur Berechnung des Wertes für den Nickwinkel aus den um die ermittelten Einwirkungen der Unebenheiten der Oberfläche auf den Nickwinkel korrigierten Werten der Höhe der Vorderachse und der Höhe der Hinterachse vorgesehen.

In weiterhin vorteilhafter Ausgestaltung der Erfindung ist ein adaptives Filter zur Ausgabe eines gefilterten Wertes des Nickwinkels in Abhängigkeit des Wertes des Nickwinkels vorgesehen, wobei das Filter zumindest einen veränderlichen Parameter aufweist, der in Abhängigkeit des Wertes des Nickwinkels und des gefilterten Wertes des Nickwinkels verändert wird.

In weiterhin vorteilhafter Ausgestaltung der Erfindung kann die optische Lichtachse des Scheinwerfers mittels des Aktors zudem in Abhängigkeit des Wertes des Nickwinkels des Landfahrzeuges relativ zu dem Landfahrzeug nach oben und/oder unten geneigt werden.

In weiterhin vorteilhafter Ausgestaltung der Erfindung ist das adaptive Filter ein Tiefpassfilter, wobei vorteilhafterweise der zumindest eine veränderliche Parameter eine Grenzfrequenz des Tiefpassfilters ist.

In weiterhin vorteilhafter Ausgestaltung der Erfindung ist das adaptive Filter ein zeitlicher Mittelwertbildner, wobei vorteilhafterweise der zumindest eine veränderliche Parameter die Zeitdauer ist, über die der Mittelwertbildner den Mittelwert bildet.

In weiterhin vorteilhafter Ausgestaltung der Erfindung ist das adaptive Filter ein mathematisches Modell oder eine neuronales Netz. Ein Ausführungsbeispiel für ein solches Modell ist z.B. in der WO 92/10377 offenbart.

In weiterhin vorteilhafter Ausgestaltung der Erfindung weist die Scheinwerferanlage einen Auswähler auf, mittels dessen ein kombinierter Wert für den Nickwinkel anteilig aus dem Wert des Nickwinkels, beispielsweise des gemessenen Nickwinkels, und dem berechneten Wert des Nickwinkels, der beispielsweise aus der Fahrzeugbeschleunigung ermittelt wird, bildbar ist. In weiterhin vorteilhafter Ausgestaltung der Erfindung wird die optische Lichtachse des Scheinwerfers mittels des Aktors in Abhängigkeit dieses kombinierten Wertes des Nickwinkels relativ zu dem Landfahrzeug nach oben und/ oder unten geneigt. Die Bildung des kombinierten Werts für den Nickwinkel erfolgt in weiterhin vorteilhafter Ausgestaltung der Erfindung in Abhängigkeit eines Wertes der ersten zeitlichen Ableitung des Nickwinkels, der vorteilhafterweise mittels des adaptiven Filters ermittelt wird.

Weitere Vorteile und Einzelheiten ergeben sich aus der nachfolgenden Beschreibung von Ausführungsbeispielen. Dabei zeigen:

Fig. 1    ein Kraftfahrzeug,
Fig. 2    ein Steuergerät,
Fig. 3    einen Nickwinkelschätzer,
Fig. 4    ein Oberflächenmodell,
Fig. 5    einen Nickwinkelschätzer,
Fig. 6    ein Steuergerät,
Fig. 7    ein Filter,
Fig. 8    ein Filter, und
Fig. 9    eine Implementierung für einen Auswähler.

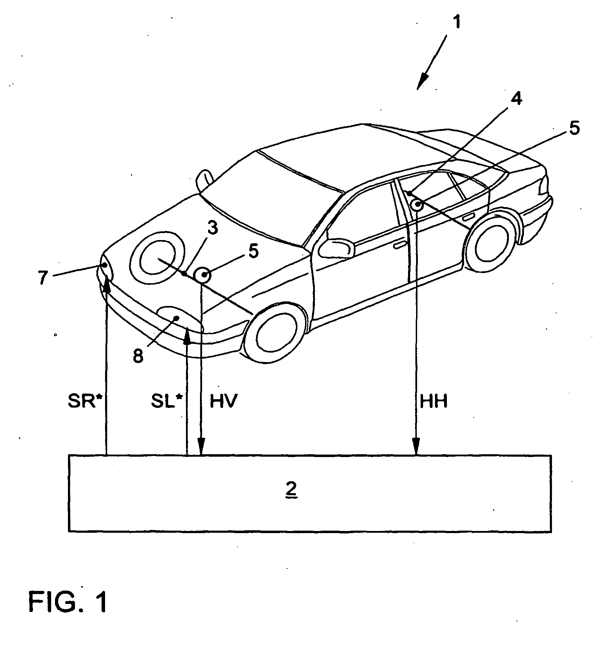

Fig. 1 zeigt ein Kraftfahrzeug 1 mit einem Steuergerät 2. Das Steuergerät 2 ist auf dem Kraftfahrzeug angeordnet, jedoch aus Gründen der Übersichtlichkeit separat dargestellt. Das Kraftfahrzeug weist zwei mittels je eines nicht dargestellten Aktors einstellbare Scheinwerfer 7 und 8 auf, wobei die optische Lichtachse der Scheinwerfer 7 und 8 mittels der Aktoren zu dem Kraftfahrzeug 1 durch von dem Steuergerät 2 erzeugte Steuerbefehle SR* und SL* nach oben und/oder unten geneigt werden kann. Eine Ausführung zur derartigen Verstellung von Scheinwerfern kann z.B. der DE 100 44 512 A1 entnommen werden. Die Steuerbefehle SR* und SL* können gleich oder unabhängig voneinander sein.

Das Kraftfahrzeug 1 weist eine Vorderachse 3 und eine Hinterachse 4 auf. An der Vorderachse 3 und der Hinterachse 4 sind jeweils ein Sensor 5 und 6 zum Messen der Höhe der Vorderachse 3 und der Höhe der Hinterachse 4 vorgesehen. Von den Sensoren 5 und 6 werden Werte HV und HH für die Höhe der Vorderachse 3 und die Höhe der Hinterachse 4 an das Steuergerät 2 übertragen.

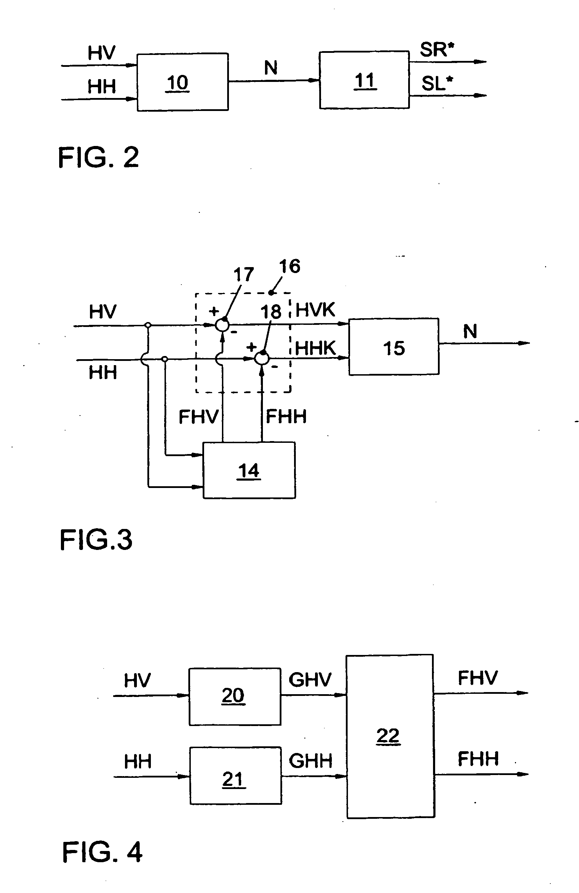

Fig. 2 zeigt ein Ausführungsbeispiel für ein Steuergerät 2. Das Steuergerät 2 weist einen Nickwinkelschätzer 10 zur Berechnung eines Wertes N für den Nickwinkel des Kraftfahrzeugs 1 in Abhängigkeit von Werten HV und HH für die Höhe der Vorderachse 3 bzw. die Höhe der Hinterachse 4 auf. Das Steuergerät 2 weist zudem eine Scheinwerfersteuerung 11 zur Berechnung der Steuerbefehle SR* und SL* in Abhängigkeit des Wertes N für den Nickwinkel des Kraftfahrzeugs 1 auf.

Fig. 3 zeigt ein bevorzugtes Ausführungsbeispiel für einen Nickwinkelschätzer 10. Dieser weist ein Oberflächen modell 14 zur Ermittlung von Einwirkungen von Unebenheiten der Oberfläche (auf der sich das Kraftzeug bewegt) auf den Nickwinkel, eine Korrekturvorrichtung 16 zur Korrektur des Wertes HV der Höhe der Vorderachse 3 und des Wertes HH der Höhe der Hinterachse 4 um die durch das Oberflächenmodell 14 ermittelten Einwirkungen der Unebenheiten der Oberfläche auf den Nickwinkel und einen Nickwinkelberechner 15 auf.

Die Korrekturvorrichtung 16 weist Summationspunke 17 und 18 auf, mittels derer von dem Oberflächenmodell ausgegebene FHV und FHH vom dem Wert HV der Höhe der Vorderachse 3 bzw. dem Wert HH der Höhe der Hinterachse 4 abgezogen werden. Der so gebildete um die ermittelten Einwirkungen der Unebenheiten der Oberfläche auf den Nickwinkel korrigierte Wert HVK der Höhe der Vorderachse 3 und der so gebildete um die ermittelten Einwirkungen der Unebenheiten der Oberfläche auf den Nickwinkel korrigierte Wert HHK der Höhe der Hinterachse 4 sind Eingangsgrößen in den Nickwinkelberechner 15 zur Berechnung des Wertes N für den Nickwinkel. Der Nickwinkel wird dabei gemäß

$$N = \arccos((HHK-HVK)/l)$$

gebildet, wobei $l$ der Abstand der Vorderachse und der Hinterachse ist.

Fig. 4 zeigt ein besonders vorteilhaftes Ausführungsbeispiel für das Oberflächen modell 14. Das Oberflächen modell 14 weist ein Hochpassfilter 20 zum Filtern des Wertes HV der Höhe der Vorderachse 3 und zur Ausgabe eines hochpass-gefilterten Wertes GHV der Höhe der Vorderachse 3 sowie ein Hochpassfilter 21 zum Filtern des Wertes HH der Höhe der Hinterachse 4 und zur Ausgabe eines hochpass-gefilterten Wertes GHH der Höhe der Hinterachse 4 auf. Die jeweilige Grenzfrequenz der Hochpassfilter liegt vorteilhafterweise in einem Bereich zwischen 0,1Hz und 5Hz, vorteilhafterweise bei wesentlichen 1 Hz.

In besonders vorteilhafter Ausgestaltung weist das Oberflächenmodell 14 einen Korrelator 22 auf, der von dem hochpass-gefilterten Wert GHV der Höhe der Vorderachse 3 und dem hochpass-gefilterten Wert GHH der Höhe der Hinterachse 4 nur die sich verändernden Anteile als unkorrelierten Wert FHV der Höhe der Vorderachse 3 und unkorrelierten Wert FHH der Höhe der Hinterachse 4 ausgibt, die im jeweils anderen Wert nicht enthalten sind.

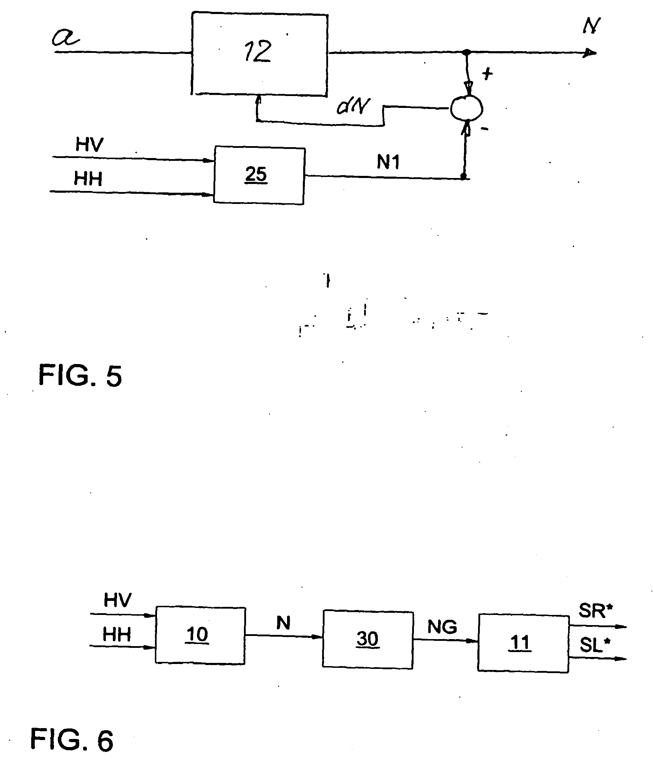

Fig. 5 zeigt ein zu dem vorteilhaften Ausführungsbeispiel in Fig. 3 alternatives Ausführungsbeispiel für einen Nickwinkelschätzer 10. Dieser basiert auf einem mathematischen Modell 12 des Kraftfahrzeuges. Die Fahrzeugneigung N ist abhängig von der Fahrzeugbeschleunigung a.
Beispielsweise:

$$N = a \cdot B + C$$

Dabei werden die Koeffizienten B + C durch die Abweichung dN der Fahrzeugneigung adaptiert.

Fig. 6 zeigt ein zu dem Ausführungsbeispiel in Fig. 2 alternatives Ausführungsbeispiel für ein Steuergerät 2. Das Steuergerät 2 weist ebenfalls einen Nickwinkelschätzer 10 zur Berechnung eines Wertes N für den Nickwinkel des Kraftfahrzeugs 1 in Abhängigkeit der Fahrzeugbeschleunigung a auf. Anstelle des Nickwinkelschätzers 10 kann auch ein Nickwinkelberechner 25 verwendet werden.

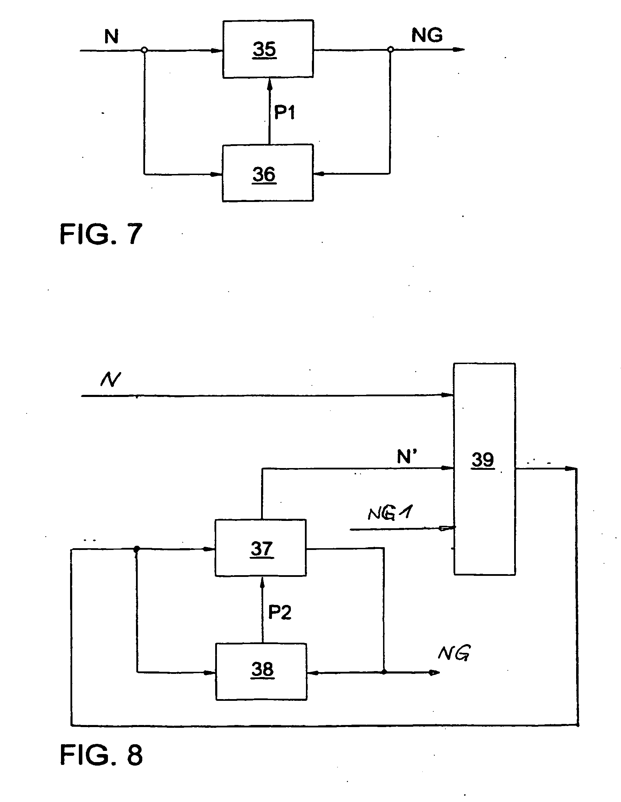

Das Steuergerät 2 weist ferner ein Filter 30 zu Erzeugung eines gefilterten Wertes NG für den Nickwinkel des Kraftfahrzeugs 1 in Abhängigkeit des Wertes N für den Nickwinkel des Kraftfahrzeugs 1 auf. Ausführungsbeispiele für das adaptive Filter 30 sind in Fig. 7 und in Fig. 8 erläutert.

Das Steuergerät 2 weist zudem eine Scheinwerfersteuerung 11 zur Berechnung der Steuerbefehle SR* und SL* in Abhängigkeit des gefilterten Wertes NG für den Nickwinkel des Kraftfahrzeugs 1 auf.

Fig. 7 zeigt ein Ausführungsbeispiel für das Filter 30. Das Filter 30 weist ein adaptives Filter 35 zur Ausgabe eines gefilterten Wertes NG für den Nickwinkel und einen Parameterberechner 36 zur Berechnung mindestens eines veränderlichen Parameters P1 des adaptiven Filters 35 in Abhängigkeit des Wertes N für den Nickwinkel und des gefilterten Wertes NG für den Nickwinkel auf. Das adaptive Filter 35 kann z.B. ein Tiefpassfilter und der zumindest eine veränderliche Parameter P1 eine Grenzfrequenz des Tiefpassfilters sein. Das adaptive Filter 35 kann z.B. auch ein zeitlicher Mittelwertbildner und der zumindest eine veränderliche Parameter P1 die Zeitdauer sein, über die der Mittelwertbildner den Mittelwert bildet.

Fig. 8 zeigt ein besonders vorteilhaftes Ausführungsbeispiel für das Filter 30. Das Filter 30 weist ein adaptives Filter 37 zur Ausgabe eines gefilterten Wertes NG für den Nickwinkel und einen Parameterberechner 38 zur Berechnung mindestens eines veränderlichen Parameters P2 des adaptiven Filters 37 in Abhängigkeit des Wertes N für den Nickwinkel und des gefilterten Wertes NG für den Nickwinkel auf. Das Filter 30 weist zudem einen Auswähler 39 auf, mittels dessen ein kombinierter gefilterter Wert - im vorliegenden Fall mit NG1 bezeichnet - für den Nickwinkel anteilig auf dem Wert N (gemessen) des Nickwinkels und dem berechneten NG1 Wert des Nickwinkels in Abhängigkeit eines Wertes N' der ersten zeitlichen Ableitung des Nickwinkels (Fig. 5). bildbar ist. Der Wert N' der ersten zeitlichen Ableitung des Nickwinkels wird durch das Filter 30 und zwar im konkreten Ausführungsbeispiel durch das adaptive Filter 37 berechnet. Das adaptive Filter 37 kann in diesem Fall z.B. ein mathematisches Modell gemäß WO 92/10377 sein.

Eine Implementierung für einen Auswähler 39 ist z.B.

$$NG = w1^*NG1 + w2^*N$$

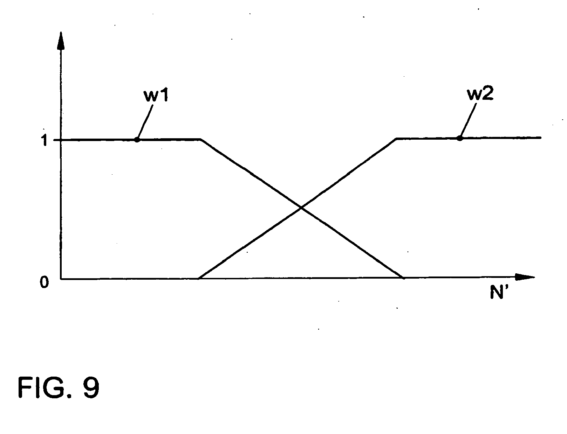

wobei w1 und w2 von dem Wert N' der ersten zeitlichen Ableitung des Nickwinkels abhängige Wichtungswerte sind, deren Abhängigkeit von dem Wert N' der ersten zeitlichen Ableitung des Nickwinkels in Fig. 9 gezeigt ist.

Unter Höhe der Vorderachse und Höhe der Hinterachse in Sinne der Erfindung sind anstelle der absoluten Werte insbesondere - wie in der Regelungstechnik üblich - deren Variation um ihren Arbeitspunkt zu verstehen.

## BEZUGSZEICHENLISTE

| | |
|---|---|
| 1 | Kraftfahrzeug |
| 2 | Steuergerät |
| 3 | Vorderachse |
| 4 | Hinterachse |
| 5, 6 | Sensoren |
| 7,8 | Scheinwerfer |
| 10 | Nickwinkelschätzer |
| 11 | Scheinwerfersteuerung |
| 12 | mathematisches Fahrzeugmodell |
| 14 | Oberflächenmodel |
| 15, 25, 26 | Nickwinkelberechner |
| 16 | Korrekturvorrichtung |
| 17, 18, 27 | Summationspunke |

| 20, 21 | Hochpassfilter |
|---|---|
| 22 | Korrelator |
| 30 | Filter |
| 35, 37 | adaptives Filter |
| 36, 38 | Parameterberechner |
| 39 | Auswähler |
| | |
| N | Wert N für den Nickwinkel |
| SR*, SL* | Steuerbefehle |
| HV | Wert für die Höhe der Vorderachse |
| HH | Wert für die Höhe der Hinterachse |
| l | Abstand der Vorderachse von der Hinterachse |
| FHV | unkorrelierter Wert der Höhe der Vorderachse |
| FHH | unkorrelierter Wert der Höhe der Hinterachse |
| HVK | korrigierter Wert der Höhe der Vorderachse |
| HHK | korrigierter Wert der Höhe der Hinterachse |
| GHV | hochpass-gefilterter Wert der Höhe der Vorderachse |
| GHH | hochpass-gefilterter Wert der Höhe der Hinterachse |
| P1, P2 | veränderliche Parameter |
| NG, NG1 | gefilterter Wert für den Nickwinkel |
| N' | Wert der ersten zeitlichen Ableitung des Nickwinkels |
| w1, w2 | Wichtungswerte |
| a | Fahrzeugbeschleunigung |

**Patentansprüche**

1. Scheinwerferanlage für ein auf einer Oberfläche fahrbares Landfahrzeug, insbesondere ein Kraftfahrzeug (1), mit zumindest einem mittels eines Aktors einstellbaren Scheinwerfer (7, 8), wobei eine optische Lichtachse des Scheinwerfers (7, 8) mittels des Aktors in Abhängigkeit eines Wertes (N) des Nickwinkels des Landfahrzeugs relativ zu dem Landfahrzeug nach oben und/oder unten geneigt werden kann, **dadurch gekennzeichnet, dass** ein Oberflächenmodell (14) zur Ermittlung von Einwirkungen von Unebenheiten der Oberfläche auf den Nickwinkel und eine Korrekturvorrichtung (16) zur Korrektur des Wertes (N) vorgesehen ist, um die optische Lichtachse des Scheinwerfers (7, 8) mittels des Aktors in Abhängigkeit des durch das Oberflächenmodell (14) gebildeten korrigierten Wertes (N) des Nickwinkels nach oben und/oder nach unten zu neigen.

2. Scheinwerferanlage nach Anspruch 1, wobei das Landfahrzeug eine Vorderachse (3) und eine Hinterachse (4) sowie Sensorik (5, 6) zur Bestimmung eines Wertes (HV) der Höhe der Vorderachse (3) und eines Wertes (HH) der Höhe der Hinterachse (4) aufweist, **dadurch gekennzeichnet, dass** die Korrekturvorrichtung (16) zur Korrektur des Wertes (HV) der Höhe der Vorderachse (3) und des Wertes (HH) der Höhe der Hinterachse (4) um die ermittelten Einwirkungen der Unebenheiten der Oberfläche auf den Nickwinkel ausgebildet ist.

3. Scheinwerferanlage nach Anspruch 2, **dadurch gekennzeichnet, dass** sie einen Nickwinkelberechner (15) zur Berechnung des Wertes (N) für den Nickwinkel aus den um die ermittelten Einwirkungen der Unebenheiten der Oberfläche auf den Nickwinkel korrigierten Werten (HVK, HHK) der Höhe der Vorderachse (3) und der Höhe der Hinterachse (4) aufweist.

4. Scheinwerferanlage nach Anspruch 1, 2 oder 3, **dadurch gekennzeichnet, dass** ein adaptives Filter (35, 37) zur Ausgabe eines gefilterten Wertes (NG, NG1) des Nickwinkels in Abhängigkeit des Wertes (N) des Nickwinkels vorgesehen ist, wobei das adaptive Filter (35, 37) zumindest einen veränderlichen Parameter (P1, P2) aufweist, der in Abhängigkeit des Wertes (N) des Nickwinkels und des gefilterten Wertes (NG, NG1) des Nickwinkels verändert wird.

5. Scheinwerferanlage für ein Landfahrzeug, insbesondere ein Kraftfahrzeug (1), mit zumindest einem mittels eines Aktors einstellbaren Scheinwerfer (7, 8), wobei eine optische Lichtachse des Scheinwerfers (7, 8) mittels des Aktors relativ zu dem Landfahrzeug nach oben und/oder unten geneigt werden kann, **dadurch gekennzeichnet, dass** ein adaptiver Filter (35, 37) zur Ausgabe eines gefilterten Wertes (NG, NG1) des Nickwinkels in Abhängigkeit des Wertes (N) des Nickwinkels vorgesehen ist, wobei der adaptive Filter (35, 37) zumindest einen veränderlichen Parameter (P1, P2) aufweist, der in Abhängigkeit des Wertes (N) des Nickwinkels und des gefilterten Wertes (NG, NG1) des Nickwinkels veränderbar ist, um die optische Lichtachse des Scheinwerfers (7, 8) mittels des Aktors in Abhängigkeit des durch den adaptiven Filter (35, 37) gebildeten veränderlichen Parameters (P1, P2) nach oben und/oder nach unten zu neigen.

6. Scheinwerferanlage nach Anspruch 4 und 5, **dadurch gekennzeichnet, dass** die optische Lichtachse des Scheinwerfers (7, 8) mittels des Aktors in Abhängigkeit des gefilterten Wertes (NG, NG1) des Nickwinkels des Landfahrzeugs relativ zu dem Landfahrzeug nach oben und/oder unten geneigt werden kann.

7. Scheinwerferanlage nach Anspruch 6, **dadurch gekennzeichnet, dass** die optische Lichtachse des Scheinwerfers (7, 8) mittels des Aktors auch in Abhängigkeit des Wertes (N) des Nickwinkels des Landfahrzeuges relativ zu dem Landfahrzeug nach oben und/oder unten geneigt werden kann.

**8.** Scheinwerferanlage nach einem der Ansprüche 4 bis 7, **dadurch gekennzeichnet, dass** das adaptive Filter (35) ein Tiefpassfilter ist.

**9.** Scheinwerferanlage nach Anspruch 8, **dadurch gekennzeichnet, dass** der zumindest eine veränderliche Parameter (P1) eine Grenzfrequenz des Tiefpassfilters ist.

**10.** Scheinwerferanlage nach einem der Ansprüche 4 bis 9, **dadurch gekennzeichnet, dass** das adaptive Filter (35) ein zeitlicher Mittelwertbildner ist.

**11.** Scheinwerferanlage nach Anspruch 10, **dadurch gekennzeichnet, dass** der zumindest eine veränderliche Parameter (P1) die Zeitdauer ist, über die der Mittelwertbildner den Mittelwert bildet.

**12.** Scheinwerferanlage nach einem der Ansprüche 4 bis 7, **dadurch gekennzeichnet, dass** das adaptive Filter (35, 37) ein mathematisches Modell oder ein neuronales Netz ist.

**13.** Scheinwerferanlage nach einem der Ansprüche 4 bis 12, **dadurch gekennzeichnet, dass** sie einen Auswähler (39) aufweist, mittels dessen ein kombinierter Wert (NG) für den Nickwinkel anteilig auf dem Wert (N) des Nickwinkels und dem gefilterten Wert (NG1) des Nickwinkels bildbar ist.

**14.** Scheinwerferanlage nach Anspruch 13, **dadurch gekennzeichnet, dass** die optische Lichtachse des Scheinwerfers (7, 8) mittels des Aktors in Abhängigkeit des kombinierten Wertes (NG) des Nickwinkels relativ zu dem Landfahrzeug nach oben und/oder unten geneigt werden kann.

**15.** Scheinwerferanlage nach Anspruch 13 oder 14, **dadurch gekennzeichnet, dass** mittels des Auswählers (39) der kombinierte Wert (NG) für den Nickwinkel anteilig aus dem Wert (N) des Nickwinkels und dem gefilterten Wert (NG1) des Nickwinkels in Abhängigkeit eines Wertes (N') der ersten zeitlichen Ableitung des Nickwinkels bildbar ist.

**16.** Scheinwerferanlage nach Anspruch 15, **dadurch gekennzeichnet, dass** das adaptive Filter (37) den Wert (N') der ersten zeitlichen Ableitung des Nickwinkels bildet.

**17.** Scheinwerferanlage nach einem der Ansprüche 5 bis 16, wobei das Landfahrzeug auf einer Oberfläche fahrbar ist, **dadurch gekennzeichnet, dass** ein Oberflächenmodell (14) zur Ermittlung von Einwirkungen von Unebenheiten der Oberfläche auf den Nickwinkel vorgesehen ist.

**18.** Scheinwerferanlage nach Anspruch 17, **dadurch gekennzeichnet, dass** eine Korrekturvorrichtung (16) zur Korrektur des Wertes (N) des Nickwinkels um die ermittelten Einwirkungen der Unebenheiten der Oberfläche auf den Nickwinkel vorgesehen ist.

**19.** Scheinwerferanlage nach Anspruch 17 oder 18, wobei das Landfahrzeug eine Vorderachse (3) und eine Hinterachse (4) sowie Sensorik zur Bestimmung eines Wertes (HV) der Höhe der Vorderachse (3) und eines Wertes (HH) der Höhe der Hinterachse (4) aufweist, **dadurch gekennzeichnet, dass** die Korrekturvorrichtung (16) zur Korrektur des Wertes (HV) der Höhe der Vorderachse (3) und des Wertes der Höhe (HH) der Hinterachse (4) um die ermittelten Einwirkungen der Unebenheiten der Oberfläche auf den Nickwinkel ausgebildet ist.

**20.** Scheinwerferanlage nach Anspruch 19, **dadurch gekennzeichnet, dass** sie einen Nickwinkelberechner (15) zur Berechnung des Wertes (N) für den Nickwinkel aus den um die ermittelten Einwirkungen der Unebenheiten der Oberfläche auf den Nickwinkel korrigierten Werten (HVK, HHK) der Höhe der Vorderachse (3) und der Höhe der Hinterachse (4) aufweist.

**21.** Scheinwerferanlage für ein Landfahrzeug, insbesondere ein Kraftfahrzeug (1), mit zumindest einem mittels eines Aktors einstellbaren Scheinwerfer (7, 8), wobei eine optische Lichtachse des Scheinwerfers (7, 8) mittels des Aktors relativ zu dem Landfahrzeug nach oben und/oder unten geneigt werden kann, insbesondere Scheinwerferanlage nach einem der vorhergehenden Ansprüche, **dadurch gekennzeichnet, dass** die optische Lichtachse des Scheinwerfers (7, 8) mittels des Aktors in Abhängigkeit einer in Abhängigkeit eines Wertes (N') der ersten zeitlichen Ableitung des Nickwinkels gebildeten Wertes relativ zu dem Landfahrzeug nach oben und/oder unten geneigt werden kann.

**22.** Landfahrzeug, insbesondere Kraftfahrzeug (1), **dadurch gekennzeichnet, dass** es eine Scheinwerferanlage nach einem der vorhergehenden Ansprüche aufweist.

**Claims**

**1.** Headlight system for a land vehicle which can be driven on a surface, in particular a motor vehicle (1), having at least one headlight (7, 8) which can be adjusted by an actuator, it being possible to incline an optical light axis of the headlight (7, 8) upwards and/or downwards relative to the land vehicle by means of the actuator as a function of a value (N) of the pitch angle of the land vehicle, **characterized in that** a surface model (14) is provided for determining effects of unevennesses of the surface on the pitch angle and a correction device (16) for correcting the value (N) are provided in order to incline the optical light axis of the headlight (7, 8) upwards and/or downwards by means of the actuator as a function of the corrected value (N), formed by the surface model (14), of the pitch angle.

2. Headlight system according to Claim 1, in which the land vehicle has a front axle (3) and a rear axle (4) as well as a sensor system (5, 6) for determining a value (HV) of the height of the front axle (3) and a value (HH) of the height of the rear axle (4), **characterized in that** the correction device (16) is designed for correcting the value (HV) of the height of the front axle (3) and the value (HH) of the height of the rear axle (4) by the determined effects of the unevennesses of the surface on the pitch angle.

3. Headlight system according to Claim 2, **characterized in that** it has a pitch angle calculator (15) for calculating the value (N) for the pitch angle from the values (HVK, HHK), corrected by the determined effects of the unevennesses of the surface on the pitch angle, of the height of the front axle (3) and of the height of the rear axle (4).

4. Headlight system according to Claim 1, 2 or 3, **characterized in that** an adaptive filter (35, 37) is provided for outputting a filtered value (NG, NG1) of the pitch angle as a function of the value (N) of the pitch angle, the adaptive filter (35, 37) having at least one variable parameter (P1, P2) which is varied as a function of the value (N) of the pitch angle and of the filtered value (NG, NG1) of the pitch angle.

5. Headlight system for a land vehicle, in particular a motor vehicle (1), having at least one headlight (7, 8) which can be adjusted by an actuator, in which an optical light axis of the headlight (7, 8) can be inclined upwards and/or downwards relative to the land vehicle by means of the actuator, **characterized in that** an adaptive filter (35, 37) is provided for outputting a filtered value (NG, NG1) of the pitch angle as a function of the value (N) of the pitch angle, the adaptive filter (35, 37) having at least one variable parameter (P1, P2) which can be varied as a function of the value (N) of the pitch angle and of the filtered value (NG, NG1) of the pitch angle in order to incline the optical light axis of the headlight (7, 8) upwards and/or downwards by means of the actuator as a function of the variable parameter (P1, P2) formed by the adaptive filter (35, 37).

6. Headlight system according to Claims 4 and 5, **characterized in that** the optical light axis of the headlight (7, 8) can be inclined upwards and/or downwards relative to the land vehicle by means of the actuator as a function of the filtered value (NG, NG1) of the pitch angle of the land vehicle.

7. Headlight system according to Claim 6, **characterized in that** the optical light axis of the headlight (7, 8) can be inclined upwards and/or downwards relative to the land vehicle by means of the actuator also as a function of the value (N) of the pitch angle of the land vehicle.

8. Headlight system according to one of Claims 4 to 7, **characterized in that** the adaptive filter (35) is a low pass filter.

9. Headlight system according to Claim 8, **characterized in that** the at least one variable parameter (P1) is a cutoff frequency of the low pass filter.

10. Headlight system according to one of Claims 4 to 9, **characterized in that** the adaptive filter (35) is a time averaging device.

11. Headlight system according to Claim 10, **characterized in that** the at least one variable parameter (P1) is the time period over which the averaging device forms the mean value.

12. Headlight system according to one of Claims 4 to 7, **characterized in that** the adaptive filter (35, 37) is a mathematical model or a neural network.

13. Headlight system according to one of Claims 4 to 12, **characterized in that** it has a selector (39) by means of which a combined value (NG) of the pitch angle can be formed proportionately on the value (N) of the pitch angle and on the filtered value (NG1) of the pitch angle.

14. Headlight system according to Claim 13, **characterized in that** the optical light axis of the headlight (7, 8) can be inclined upwards and/or downwards relative to the land vehicle by means of the actuator as a function of the combined value (NG) of the pitch angle.

15. Headlight system according to Claim 13 or 14, **characterized in that** it is possible by means of the selector (39) to form the combined value (NG) for the pitch angle proportionately from the value (N) of the pitch angle and the filtered value (NG1) of the pitch angle as a function of a value (N') of the first time derivative of the pitch angle.

16. Headlight system according to Claim 15, **characterized in that** the adaptive filter (37) forms the value (N') of the first time derivative of the pitch angle.

17. Headlight system according to one of Claims 5 to 16, in which the land vehicle can be driven on a surface, **characterized in that** a surface model (14) is provided for determining effects of unevennesses of the surface on the pitch angle.

18. Headlight system according to Claim 17, **characterized in that** a correction device (16) is provided for correcting the value (N) of the pitch angle by the determined effects of the unevennesses of the surface on the pitch angle.

19. Headlight system according to Claim 17 or 18, in which the land vehicle has a front axle (3) and a rear axle (4) as well as a sensor system for determining a value (HV) of the height of the front axle (3) and a value (HH) of the height of the rear axle (4), **characterized in that** the correction device (16) is designed for correcting the value (HV) of the height of the front axle (3) and the value (HH) of the height of the rear axle (4) by the determined effects of the unevennesses of the surface on the pitch angle.

20. Headlight system according to Claim 19, **characterized in that** it has a pitch angle calculator (15) for calculating the value (N) for the pitch angle from the values (HVK, HHK), corrected by the determined effects of the unevennesses of the surface on the pitch angle, of the height of the front axle (3) and of the height of the rear axle (4).

21. Headlight system for a land vehicle, in particular a motor vehicle (1), having at least one headlight (7, 8) which can be adjusted by means of an actuator, it being possible for an optical light axis of the headlight (7, 8) to be inclined upwards and/or downwards relative to the land vehicle by means of the actuator, in particular a headlight system according to one of the preceding claims, **characterized in that** the optical light axis of the headlight (7, 8) can be inclined upwards and/or downwards relative to the land vehicle by means of the actuator as a function of a value formed as a function of a value (N') of the first time derivative of the pitch angle.

22. Land vehicle, in particular motor vehicle (1), **characterized in that** it has a headlight system as claimed in one of the preceding claims.

**Revendications**

1. Dispositif de phares pour un véhicule routier déplaçable sur une surface, notamment un véhicule automobile (1), comprenant au moins un phare (7, 8) pouvant être ajusté au moyen d'un actionneur, un axe de lumière optique du phare (7, 8) pouvant être incliné par rapport au véhicule routier vers le haut et/ou vers le bas au moyen de l'actionneur en fonction d'une valeur (N) de l'angle de tangage du véhicule routier, **caractérisé en ce qu'**un modèle de surface (14) est prévu pour déterminer des effets des irrégularités de la surface sur l'angle de tangage et un dispositif de correction (16) est prévu pour corriger la valeur (N), afin d'incliner vers le haut et/ou vers le bas l'axe de lumière optique du phare (7, 8) au moyen de l'actionneur en fonction de la valeur (N) corrigée de l'angle de tangage formée par le modèle de surface (14).

2. Dispositif de phares selon la revendication 1, dans lequel le véhicule routier présente un essieu avant (3) et un essieu arrière (4) ainsi qu'un système de capteurs (5, 6) pour déterminer une valeur (HV) de la hauteur de l'essieu avant (3) et une valeur (HH) de la hauteur de l'essieu arrière (4), **caractérisé en ce que** le dispositif de correction (16) est réalisé pour effectuer la correction de la valeur (HV) de la hauteur de l'essieu avant (3) et de la valeur (HH) de la hauteur de l'essieu arrière (4) en tenant compte des effets déterminés des irrégularités de la surface sur l'angle de tangage.

3. Dispositif de phares selon la revendication 2, **caractérisé en ce qu'**il présente un calculateur d'angle de tangage (15) pour calculer la valeur (N) de l'angle de tangage à partir des valeurs (HVK, HHK) de la hauteur de l'essieu avant (3) et de la hauteur de l'essieu arrière (4), corrigées en tenant compte des effets déterminés des irrégularités de la surface sur l'angle de tangage.

4. Dispositif de phares selon la revendication 1, 2 ou 3, **caractérisé en ce qu'**un filtre adaptatif (35, 37) est prévu pour fournir une valeur filtrée (NG, NG1) de l'angle de tangage en fonction de la valeur (N) de l'angle de tangage, le filtre adaptatif (35, 37) présentant au moins un paramètre variable (P1, P2) qui est modifié en fonction de la valeur (N) de l'angle de tangage et de la valeur filtrée (NG, NG1) de l'angle de tangage.

5. Dispositif de phares pour un véhicule routier, notamment un véhicule automobile (1), comprenant au moins un phare (7, 8) pouvant être ajusté au moyen d'un actionneur, un axe de lumière optique du phare (7, 8) pouvant être incliné par rapport au véhicule routier vers le haut et/ou vers le bas au moyen de l'actionneur, **caractérisé en ce qu'**un filtre adaptatif (35, 37) est prévu pour fournir une valeur filtrée (NG, NG1) de l'angle de tangage en fonction de la valeur (N) de l'angle de tangage, le filtre adaptatif (35, 37) présentant au moins un paramètre variable (P1, P2) qui peut être modifié en fonction de la valeur (N) de l'angle de tangage et de la valeur filtrée (NG, NG1) de l'angle de tangage, afin d'incliner vers le haut et/ou vers le bas l'axe de lumière optique du phare (7, 8) au moyen de l'actionneur en fonction du paramètre variable (P1, P2) formé par le filtre adaptatif (35, 37).

6. Dispositif de phares selon les revendications 4 et 5, **caractérisé en ce que** l'axe de lumière optique du phare (7, 8) peut être incliné vers le haut et/ou vers le bas par rapport au véhicule routier au moyen de l'actionneur en fonction de la valeur filtrée (NG, NG1) de l'angle de tangage du véhicule routier.

7. Dispositif de phares selon la revendication 6, **caractérisé en ce que** l'axe de lumière optique du phare (7, 8) peut être incliné vers le haut et/ou vers le bas par rapport au véhicule routier au moyen de l'actionneur également en fonction de la valeur (N) de l'angle de tangage du véhicule routier.

8. Dispositif de phares selon l'une quelconque des revendications 4 à 7, **caractérisé en ce que** le filtre adaptatif (35) est un filtre passe-bas.

9. Dispositif de phares selon la revendication 8, **caractérisé en ce que** l'au moins un paramètre variable (P1) est une fréquence limite du filtre passe-bas.

10. Dispositif de phares selon l'une quelconque des revendications 4 à 9, **caractérisé en ce que** le filtre adaptatif (35) est un dispositif de génération de valeur moyenne temporel.

11. Dispositif de phares selon la revendication 10, **caractérisé en ce que** l'au moins un paramètre variable (P1) est la durée pendant laquelle le dispositif de génération de valeur moyenne génère la valeur moyenne.

12. Dispositif de phares selon l'une quelconque des revendications 4 à 7, **caractérisé en ce que** le filtre adaptatif (35, 37) est un modèle mathématique ou un réseau neuronal.

13. Dispositif de phares selon l'une quelconque des revendications 4 à 12, **caractérisé en ce qu'**il présente un sélecteur (39) au moyen duquel une valeur combinée (NG) pour l'angle de tangage peut être formée en partie à partir de la valeur (N) de l'angle de tangage et de la valeur filtrée (NG1) de l'angle de tangage.

14. Dispositif de phares selon la revendication 13, **caractérisé en ce que** l'axe de lumière optique du phare (7, 8) peut être incliné vers le haut et/ou vers le bas par rapport au véhicule routier au moyen de l'actionneur en fonction de la valeur combinée (NG) de l'angle de tangage.

15. Dispositif de phares selon la revendication 13 ou 14, **caractérisé en ce que** la valeur combinée (NG) pour l'angle de tangage peut être formée au moyen du sélecteur (39) en partie à partir de la valeur (N) de l'angle de tangage et de la valeur filtrée (NG1) de l'angle de tangage en fonction d'une valeur (N') de la première dérivée dans le temps de l'angle de tangage.

16. Dispositif de phares selon la revendication 15, **caractérisé en ce que** le filtre adaptatif (37) forme la valeur (N') de la première dérivée dans le temps de l'angle de tangage.

17. Dispositif de phares selon l'une quelconque des revendications 5 à 16, dans lequel le véhicule routier peut se déplacer sur une surface, **caractérisé en ce qu'**un modèle de surface (14) est prévu pour déterminer des effets d'irrégularités de la surface sur l'angle de tangage.

18. Dispositif de phares selon la revendication 17, **caractérisé en ce qu'**un dispositif de correction (16) est prévu pour corriger la valeur (N) de l'angle de tangage en tenant compte des effets déterminés des irrégularités de la surface sur l'angle de tangage.

19. Dispositif de phares selon la revendication 17 ou 18, dans lequel le véhicule routier présente un essieu avant (3) et un essieu arrière (4) ainsi qu'un système de capteurs pour déterminer une valeur (HV) de la hauteur de l'essieu avant (3) et une valeur (HH) de la hauteur de l'essieu arrière (4), **caractérisé en ce que** le dispositif de correction (16) est réalisé pour effectuer la correction de la valeur (HV) de la hauteur de l'essieu avant (3) et de la valeur (HH) de la hauteur de l'essieu arrière (4) en tenant compte des effets déterminés des irrégularités de la surface sur l'angle de tangage.

20. Dispositif de phares selon la revendication 19, **caractérisé en ce qu'**il présente un calculateur d'angle de tangage (15) pour calculer la valeur (N) de l'angle de tangage à partir des valeurs (HVK, HHK) de la hauteur de l'essieu avant (3) et de la hauteur de l'essieu arrière (4), corrigées en tenant compte des effets déterminés des irrégularités de la surface sur l'angle de tangage.

21. Dispositif de phares pour un véhicule routier, notamment un véhicule automobile (1), comprenant au moins un phare (7, 8) pouvant être ajusté au moyen d'un actionneur, un axe de lumière optique du phare (7, 8) pouvant être incliné par rapport au véhicule routier vers le haut et/ou vers le bas au moyen de l'actionneur, en particulier, dispositif de phares selon l'une quelconque des revendications précédentes, **caractérisé en ce que** l'axe de lumière optique du phare (7, 8) peut être incliné par rapport au véhicule routier vers le haut et/ou vers le bas au moyen de l'actionneur en fonction d'une valeur formée en fonction d'une valeur (N') de la première dérivée dans le temps de l'angle de tangage.

22. Véhicule routier, en particulier véhicule automobile (1), **caractérisé en ce qu'**il présente un dispositif de phares selon l'une quelconque des revendications précédentes.

FIG. 1

FIG. 2

FIG.3

FIG. 4

FIG. 5

FIG. 6

N ────○──────→ [ **35** ] ──────○──────→ NG

P1 ↑

[ **36** ]

## FIG. 7

*N* ──────────────────────────────→ [ **39** ]

N' ──────→

*NG1* ──────→

[ **37** ]

P2 ↑

[ **38** ] ←──→ *NG*

## FIG. 8

FIG. 9

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 10044512 A1
- DE 19628405 A1
- EP 0825063 A1
- EP 0355539 B1
- DE 19824862 A1
- EP 0470407 B1
- EP 0709240 B1
- DE 4202908 A1
- DE 4437949
- EP 0847895 B1
- WO 9210377 A